# EUROPÄISCHE PATENTANMELDUNG

(11) **EP 4 467 437 A1**
(43) Veröffentlichungstag der Anmeldung: **27.11.2024**
(21) Anmeldenummer: 24177947.9
(22) Anmeldetag: 24.05.2024
(51) Int. Cl.: B62M 6/55, B62M 11/06, B62M 11/02

(54) **ANTRIEBSEINHEIT FÜR EIN MIT MUSKEL- UND/ODER MOTORKRAFT BETRIEBENES FAHRZEUG, INSBESONDERE EBIKE, PEDELEC ODER S-PEDELEC SOWIE VERFAHREN FÜR EINE MONTAGE EINER ANTRIEBSEINHEIT**

(30) Priorität: 25.05.2023 DE 102023204911
(71) Anmelder: Robert Bosch GmbH, 70442 Stuttgart (DE)
(72) Erfinder: Binder, Julian, 72827 Wannweil (DE); Trescher, Ulrich, 72072 Tuebingen (DE); Kaechele, Uwe, 72813 St. Johann-Wuertingen (DE); Holst, Stefan, 72760 Reutlingen (DE)

(57) **Zusammenfassung**

Eine Antriebseinheit (2) für ein mit Muskel und/ oder Motor betriebenes Fahrzeug, insbesondere eBike, Pedelec oder S-Pedelec, umfassend ein Gehäuse der Antriebseinheit (2), wobei das Gehäuse eine erste Gehäusehälfte und eine weitere Gehäusehälfte (11) umfasst und wobei ein Stator (20) eines Motors in der ersten Gehäusehälfte (10) befestigt ist, eine Tretwellenbaugruppe (40, 4), zumindest eine erste Platine (50, 5), eine Rotorwellenanordnung (30) umfassend einen Rotor (32), eine Rotorwelle (31, 32) des Motors, und zumindest eine weitere Gehäusekomponente (12, 6), zumindest ein Getriebe (60), welches eingerichtet ist, ein vom Motor erzeugtes Drehmoment an die Tretwellenbaugruppe (40, 4) zu übertragen, wobei alle Baugruppen derart angeordnet sind, dass sie aus einer Hauptmontagerichtung (z) eingesetzt werden können.

## Beschreibung

Die Erfindung betrifft eine Antriebseinheit zum Antreiben eines mit Muskel- und/oder Motorkraft betriebenen Fahrzeugs, sowie ein Fahrzeug mit einer Antriebseinheit und ein Verfahren zur Montage einer Antriebseinheit. Bei dem Fahrzeug handelt es sich insbesondere um ein eBike, Pedelec oder S-Pedelec.

### Stand der Technik

Bekannt sind Antriebseinheiten für Elektroräder z.B. aus DE102020210864A1. Weiterhin sind Antriebseinheiten mit vormontierten Baugruppen gängige Praxis, jedoch sind viele, nicht wertschöpfenden Montagevorgänge, erforderlich, welche durch komplexe Konstruktionen und teilweise mehrteiligen Platinenaufbauten bedingt werden.

### Offenbarung der Erfindung

Die erfindungsgemäße Antriebseinheit für ein mit Muskel und/ oder Motor betriebenes Fahrzeug, insbesondere eBike, Pedelec oder S-Pedelec mit den Merkmalen des Anspruch 1 zeichnet sich gegenüber dem Bekannten dadurch aus, dass alle Baugruppen derart angeordnet sind, dass sie aus einer Hauptmontagerichtung eingesetzt werden können.

Die Antriebseinheit umfasst dazu
- Ein Gehäuse der Antriebseinheit, wobei das Gehäuse zumindest eine erste Gehäusehälfte und eine weitere Gehäusehälfte umfasst und wobei der Stator des Motors in der ersten Gehäusehälfte befestigt ist,
- die Tretwellenbaugruppe,
- zumindest eine erste Platine,
- die Rotorwellenanordnung umfassend einen Rotor und eine Rotorwelle des Motors, und zumindest eine weitere Gehäusekomponente,
- ein Getriebe, welches eingerichtet ist, ein vom Motor erzeugtes Drehmoment an die Tretwellenbaugruppe zu übertragen.

Ein Gehäuse der Antriebseinheit (im Folgenden nur "das Gehäuse" genannt) dient einer Kapselung der Antriebseinheit und bildet eine Umhüllende gegenüber der Umwelt.

Kräfte, die von der Antriebseinheit erzeugt werden, können im Gehäuse aufgenommen werden, als auch von außen wirkende Kräfte können mittels des Gehäuses weitergeleitet oder abgefangen werden. Die Kräfte, die im Inneren der Antriebseinheit erzeugt werden, beispielsweise hervorgerufen durch eine abgegebene Leistung eines Motors, werden im Gehäuse abgestützt und umgeleitet. Die Kräfte, die von außen auf die Antriebseinheit wirken, können zum Beispiel durch einen Fahrer des Fahrzeugs hervorgerufen werden. Dazu kann der Fahrer mittels eines Kurbeltriebs das Fahrzeug zur Fortbewegung antreiben. Die dabei entstandenen Kräfte, insbesondere eine Trittkraft, werden in ein Inneres des Gehäuses geleitet und an geeigneten Lagerstellen aufgenommen.

Die Kräfte, die von außen auf die Antriebseinheit wirken, können durch einen Unfall oder ein Aufsetzen des Fahrzeugs hervorgerufen werden. Dabei schützt das Gehäuse die in ihm angeordneten Bauteile. Durch die Kapselung ergibt sich darüber hinaus eine schützende Funktion des Gehäuses gegen Witterungseinflüsse.

Das Gehäuse umfasst zumindest eine erste und eine weitere Gehäusehälfte. Die erste Gehäusehälfte kann dabei eine Halbschale, ein Gehäuseabschnitt, ein Boden oder dergleichen sein. Die erste Gehäusehälfte und die zumindest eine weitere Gehäusehälfte können Durchbrüche oder Ausnehmungen aufweisen, die von den im Innern der Antriebseinheit angeordneten Bauteile ganz oder teilweise durchdrungen werden können. Die zumindest eine weitere Gehäusehälfte kann eine Halbschale, ein Gehäuseabschnitt, ein Deckel oder dergleichen sein. Die erste Gehäusehälfte und die zumindest eine weitere Gehäusehälfte sind löslich oder unlöslich verbunden, aneinander abgestützt, gehaltert oder befestigt. Beispielsweise können die erste Gehäusehälfte und die zumindest eine weitere Gehäusehälfte miteinander verklebt und/oder verschraubt sein.

Der Stator des Motors ist in der ersten Gehäusehälfte befestigt. Der Stator des Motors ist ein Teil eines elektrischen Antriebs der Antriebseinheit und ist derart löslich oder unlöslich in der zumindest ersten Gehäusehälfte befestigt, dass er in Bezug zu der ersten Gehäusehälfte fest aufgenommen ist. Beispielsweise ist der Stator in die zumindest erste Gehäusehälfte eingepresst, geklebt, verspannt oder dergleichen.

Die Tretwellenbaugruppe umfasst zumindest eine Tretwelle, welche eine Schnittstelle für Kurbeln des Fahrzeugs aufweist, und dazu eingerichtet ist, die Trittkraft des Fahrers des Fahrzeugs aufzunehmen. Die Trittkraft wird auf Pedale eingebracht, die dazu mit Kurbeln verbunden sind, welche wiederum mit jeweils unterschiedlichen Enden einer Tretwelle verbunden sind. Ferner umfasst die Tretwellenbaugruppe Mittel zu einer Einkopplung eines vom Motor erzeugten Unterstützungsdrehmoments.

Die zumindest eine erste Platine umfasst Elektronikbaugruppen zur Steuerung und/oder Regelung der Antriebseinheit. Dabei soll die zumindest eine Platine als eine Hauptplatine, oder zentrale Platine verstanden werden, die elementare Elektronikbaugruppen oder Bausteine zur Steuerung und/oder Regelung der Antriebseinheit umfasst. Insbesondere kann die zumindest eine Platine, aus maximal einer Platine bestehen. Bevorzugt ist die zumindest eine erste Platine nicht mehrteilig. Die zumindest eine erste Platine kann aus vollflächigen FR4-Platten - zum Beispiel aus Epoxidharz und Glasfasergewebe - und/oder durch einen Platinenherstellungsprozess gefertigt und strukturiert sein. Die zumindest eine Platine kann zu einer Strukturierung der Antriebseinheit dienen. Mit der Strukturierung kann beispielsweise eine räumliche Struktur innerhalb der Antriebseinheit gemeint sein. Ferner kann mit der Strukturierung der Antriebseinheit eine funktionelle Struktur gemeint sein. Beispielsweise können alle Getriebestufen des Getriebes ober oder unterhalb der zumindest einen Platine angeordnet sein, in einer Richtung, parallel zu einer Achse der Tretwelle.

Die Rotorwellenanordnung umfasst neben einem Rotor, eine Rotorwelle des Motors, und zumindest eine weitere Gehäusekomponente, insbesondere auch Elemente zur Lagerung der Rotorwelle, insbesondere auch eine Messeinrichtung, welche eine Rotorlagemagnetanordnung umfasst. Der Rotor des Motors, als ein weiterer Teil des elektrischen Antriebs, ist drehfest auf der Rotorwelle angeordnet.

Die Rotorlagemagnetanordnung umfasst ihrerseits insbesondere einen entsprechenden Montagekragen, welcher genutzt werden kann, um die Rotorbaugruppe während der Montage bezüglich einer Radialrichtung der Rotorwelle relativ zum Stator des Motors zu fixieren. Ein Rotorlagemagnet der Rotorlagemagnetanordnung weist insbesondere entlang eines Umfangs, vorzugsweise unterschiedliche, magnetische Eigenschaften auf, sodass mit einem entsprechenden Sensor der Drehwinkel der Rotorbaugruppe erfassbar ist. Ferner umfasst die Rotorwellenanordnung insbesondere einen Montagekragen. Der Montagekragen ist in einer Gehäusekomponente des Gehäuses der Antriebseinheit angeordnet und durchdringt diese teilweise oder vollständig. Mit anderen Worten umgibt die Gehäusekomponente den Montagekragen zur radialen Lagefixierung des Rotorlagemagneten. Mit "umgibt" kann ein radiales einfassen als auch ein ovales oder anders geartetes umgeben gemeint sein.

Das Getriebe, welches eingerichtet ist, das vom Motor erzeugte Unterstützungsdrehmoment an die Tretwellenbaugruppe zu übertragen, ist ein Stirnradgetriebe, ein Kegelradgetriebe, Schneckengetriebe oder dergleichen. Das Getriebe kann ein-, zwei- oder dreistufig ausgeführt sein. Darüber hinaus kann das Getriebe eine Wanne aufweisen, die dazu eingerichtet ist, das Getriebe ganz oder teilweise aufzunehmen. Die Wanne kann dabei Ausnehmungen aufweisen. Die Wanne kann dabei zusätzliche Taschen oder Reservoirs aufweisen. Die Wanne kann ein Träger für ein Getriebefett, beziehungsweise Schmierung des Getriebes, sein.

Der Begriff "Baugruppen" umfasst die in den Merkmalen des Anspruchs 1 aufgeführten Baugruppen, beispielsweise die Tretwellenanordnung. Die Baugruppen sind dabei derart angeordnet, dass sie aus einer Hauptmontagerichtung eingesetzt werden können. Die Hauptmontagerichtung ist die Montagerichtung, aus der die Baugruppe zugeführt werden. In einer Blickrichtung parallel zu einer Tretwelle können die Baugruppen mit einer Zuführeinrichtung in der Hauptmontagerichtung bis zu ihrer finalen Position in der ersten Gehäusehälfte zugeführt werden. Insbesondere schließt die Hauptmontagerichtung schließt dabei

Bevorzugt sind die Baugruppen derart angeordnet sind, dass für das Einsetzen der Baugruppen eine weitere translatorische (x, y) Montagerichtung und/oder rotatorische Montagerichtung vorgesehen ist. Beispielsweise ist die weitere translatorische (x, y) Montagerichtung und/oder rotatorische Montagerichtung eine lineare Bewegung in einer x- Richtung und/oder einer y- Richtung. Eine rotatorische Bewegung kann eine Dreh- und/oder Schwenkbewegung sein.

Bevorzugt weist die Tretwellenbaugruppe keine Interferenzen mit der Rotorwellenanordnung und dem Stator des Motors auf. Interferenzen sollen als Bauteilüberschneidungen oder kollidierende Körper verstanden werden. Umgekehrt bedeutet dies beispielsweise, dass, aus einer Blickrichtung parallel zu einer Achse der Tretwelle, die Baugruppen einen Abstand, einen Luftspalt oder dergleichen aufweisen. bevorzugt weisen die Baugruppen alternativ oder zusätzlich einen Luftspalt in einer Anordnung vor einem Einsetzen auf, wobei das Einsetzen nur eine translatorische erfordert, und aus einer Richtung erfolgt, die parallel zu der Blickrichtung ist. Beispielsweise wird eine Baugruppe nur in z-Richtung geführt, ohne dass eine Einsetzeinrichtung eine translatorische x,y - Bewegung und/oder rotatorische Bewegung ausführt.

Bevorzugt ist eine Steckervorrichtung in einer Richtung (y) oberhalb einer ersten Ebene angeordnet. Die erste Ebene ist aus einer Achse, welche koaxial zu der Tretwelle angeordnet ist und einer weiteren Achse, die koaxial zu der Rotorwelle angeordnet ist, aufgespannt. Die Steckervorrichtung kann einen oder mehrere Steckplätze für einen oder mehrere Stecker umfassen. Die Steckvorrichtung ist eine elektrische Schnittstelle der Antriebseinheit zu weiteren Komponenten des Fahrzeugs. Beispielsweise ist die im Antriebseinheit über ein Kabel mit einem Batteriemodul verbunden und wird durch dieses gespeist, wobei ein vom Batteriemodul ankommender Stecker in die Steckervorrichtung gesteckt werden kann.

Mit "oberhalb einer ersten Ebene" ist gemeint, dass die Steckervorrichtung einer positiven Richtung (y) folgend, oberhalb der ersten Ebene angeordnet ist. Besonders vorteilhaft ist, dass die Steckervorrichtung in einem geschützten Bereich eines Rahmenbauteils angeordnet ist, sodass Einflüsse wie Feuchtigkeit oder Staub besser zurückgehalten werden können.

In einer alternativen Ausgestaltung kann die Steckervorrichtung insbesondere auch oberhalb einer Befestigungsebene angeordnet sein. Die Befestigungsebene ist eine Ebene, die sich aus einer Achse eines ersten Befestigungsmittels und einer Achse eines weiteren Befestigungsmittels, aufspannt. Ein Befestigungsmittel ist ein Mittel mit der die Antriebseinheit zum Beispiel an einem Rahmenbauteil des Fahrzeugs befestigt ist. Insbesondere umfasst das Befestigungsmittel Aussparungen, bevorzugt Bohrungen im Gehäuse. Insbesondere ist mit "ein erstes Befestigungsmittel" und "ein weiteres Befestigungsmittel", genau zwei Befestigungsmittel gemeint und schließt damit Antriebseinheiten aus, die mehr als zwei Befestigungsmittel aufweisen. In einer Ausgestaltung kann eine Antriebseinheit auch mehr als zwei Befestigungsmittel umfassen. In dieser bevorzugten Ausgestaltung sind mit "ein erstes Befestigungsmittel" und "ein weiteres Befestigungsmittel" die am weitesten voneinander entfernt angeordneten Befestigungsmittel gemeint. Ein Befestigungsmittel kann beispielsweise auch eine Schraube, ein Gewinde, eine Durchgangsbohrung, eine Mutter oder dergleichen sein. Ein Befestigungsmittel kann auch eine Kombination der zuvor genannten Elemente sein.

Bevorzugt ist die Steckervorrichtung in einer Richtung (y) unterhalb der ersten Ebene angeordnet, wobei die erste Ebene aus einer Achse, welche koaxial zu der Tretwelle angeordnet ist und einer weiteren Achse, die koaxial zu der Rotorwelle angeordnet ist, aufgespannt ist. Besonders vorteilhaft ist bei dieser Ausgestaltung, dass die Steckervorrichtung sehr leicht zugängig angeordnet ist und für Wartungs- oder Reparaturarbeiten schnell gesteckt oder getrennt werden kann. Mit "unterhalb der ersten Ebene" ist gemeint, dass die Steckervorrichtung einer negativen Richtung (y) folgend, unterhalb der ersten Ebene angeordnet ist. In einer alternativen Ausgestaltung kann die Steckervorrichtung insbesondere auch unterhalb der Befestigungsebene angeordnet sein.

Bevorzugt umfasst die Antriebseinheit zumindest einen Geschwindigkeitssensor, wobei der zumindest eine Geschwindigkeitssensor auf der zumindest ersten Platine angeordnet ist und einen ersten Abstand zu einer hinteren Gehäusefläche aufweist, wobei der erste Abstand in einem Bereich von 5mm-50mm, bevorzugt 5mm -45mm, besonders bevorzugt -5mm -35mm liegt. Der Geschwindigkeitssensor arbeitet insbesondere mit einem Felgenmagnet. Erstrebenswert ist eine Positionierung des Geschwindigkeitssensors, in der Nähe einer hinteren Gehäusefläche, sodass ein zu detektierendes Signal des Felgenmagneten mit einer hinreichenden Messgenauigkeit detektiert werden kann.

Ein erster Abstand zu einer hinteren Gehäusefläche ist insbesondere der Abstand des Geschwindigkeitssensors zu einer hinteren Gehäusefläche aus einer Richtung gesehen, die parallel zu einer Achse der Tretwelle ist. Die hintere Gehäusefläche, insbesondere ein Teil der hinteren Gehäusefläche, ist die Fläche der Antriebseinheit, welche in einem Winkel zu der ersten Ebene verläuft und dabei nahe der Tretwelle und in einer Richtung relativ zu der Tretwelle, welche von der Rotorwelle abgewandt ist, angeordnet ist. Dabei kann die hintere Gehäusefläche auch eine Ebene oder Fläche aus Achsen von Scheitelpunkten von Gehäuseausbuchtungen in Tretwellennähe sein. In einem Zustand einer eingebauten Antriebseinheit in einem Fahrzeug, ist die hintere Gehäusefläche eine Fläche, die in einer Fahrtrichtung des Fahrzeugs abgewandten Seite des Fahrzeugs angeordnet ist. Ein erster Abstand zu einer hinteren Gehäusefläche ist insbesondere ein minimaler Abstand von dem Geschwindigkeitssensor zu der hinteren Gehäusefläche. Ein erster Abstand zu einer hinteren Gehäusefläche ist insbesondere ein fahrzeugabhängiger Abstand und kann in Abhängigkeit einer Einbaulage einer Antriebseinheit variieren, derart, dass beispielsweise ein minimaler Abstand auf einer horizontalen zur hinteren Gehäusefläche als

Bevorzugt umfasst die Antriebseinheit zumindest einen Geschwindigkeitssensor, wobei der zumindest eine Geschwindigkeitssensor auf der zumindest ersten Platine angeordnet ist und einen weiteren Abstand (u) zu einem ferromagnetischen Teil nicht unterschreitet, dadurch gekennzeichnet, dass der weitere Abstand u 1 mm - 10mm, bevorzugt 1 mm- 8 mm, besonders bevorzugt 3 - 7mm, nicht unterschreitet. Der eine weitere Abstand (u) zu einem ferromagnetischen Teil ist als Radius zu interpretieren.

Bevorzugt weist die Tretwellenbaugruppe ferner eine Messvorrichtung auf, die dazu geeignet ist, ein an der Tretwelle anliegendes Drehmoment zu erfassen. Die Messvorrichtung umfasst dabei zumindest eine Messplatine mit einer zu einer Oberfläche der Messplatine identischen Messplatinenebene, wobei die Messplatinenebene parallel oder orthogonal zu der ersten Ebene, angeordnet ist. In einer konkreten Ausführungsform kann die Messplatinenebene in einem Winkel von 20° bis 40° zu der ersten Ebene angeordnet sein.

Die Messvorrichtung kann zum Beispiel ein Drehmomentsensor, insbesondere ein magnetoelastischer Drehmomentsensors, zum Messen des Trittmoments sein, welches insbesondere durch einen Fahrer des Fahrzeugs auf die Tretwelle eingebracht wird.

Mit "orthogonal zu der ersten Ebene" ist auch "im Wesentlichen orthogonal zu der ersten Ebene" gemeint. Mit "parallel zu der ersten Ebene" ist auch "im Wesentlichen parallel zu der ersten Ebene" gemeint.

Bevorzugt umfasst die Antriebseinheit Befestigungsmittel für einen Kettenkasten, wobei zumindest zwei Befestigungsmittel für den Kettenkasten auf einem Radius angeordnet sind, wobei der Radius konzentrisch um die Achse der Tretwelle angeordnet ist und insbesondere in einem Bereich von 80mm - 110mm liegt, bevorzugt 90mm -100mm, liegt. Ein Befestigungsmittel für einen Kettenkasten ist ein Mittel, mit dem der Kettenkasten an der Antriebseinheit abgestützt, gehaltert, löslich oder unlöslich befestigt oder dergleichen, ist. Ein Befestigungsmittel für einen Kettenkasten umfasst insbesondere Aussparungen, bevorzugt Bohrungen, besonders bevorzugt Gewindebohrungen, im Gehäuse oder einer Gehäusehälfte. Ein Befestigungsmittel für einen Kettenkasten kann darüber hinaus beispielsweise eine Schraube, ein Gewinde, eine Durchgangsbohrung, eine Mutter oder dergleichen sein. Ein Befestigungsmittel für einen Kettenkasten kann auch eine Kombination der zuvor genannten Elemente umfassen.

Bevorzugt beträgt eine erste Gehäuselänge weniger als 45mm, bei einem Abtriebsmoment der Antriebseinheit von größer oder gleich 85Nm. Eine erste Gehäuselänge ist ein Abstand von der Achse der Tretwelle zu einer hinteren Gehäusefläche, aus einer Richtung gesehen, die parallel zur Achse der Tretwelle ist. Die hintere Gehäusefläche, insbesondere ein Teil der hinteren Gehäusefläche, ist die Fläche der Antriebseinheit, welche in einem Winkel zu der ersten Ebene verläuft und dabei nahe der Tretwelle und in einer Richtung relativ zu der Tretwelle, welche von der Rotorwelle abgewandt ist, angeordnet ist. Dabei kann die hintere Gehäusefläche auch eine Ebene oder Fläche aus Achsen von Scheitelpunkten von Gehäuseausbuchtungen in Tretwellennähe sein. In einem Zustand einer eingebauten Antriebseinheit in einem Fahrzeug, ist die hintere Gehäusefläche eine Fläche, die in einer Fahrtrichtung des Fahrzeugs abgewandten Seite des Fahrzeugs angeordnet ist. Unter einem Abtriebsmoment ist das Unterstützungsdrehmoment des Motors, welches an ein Abtriebsritzel übergeben wird, gemeint.

Weiter bevorzugt beträgt die erste Gehäuselänge weniger als 42mm, bevorzugt kleiner oder gleich 40mm, besonders bevorzugt kleiner oder gleich 39mm beträgt, bei einem Abtriebsmoment der Antriebseinheit (2) von größer oder gleich 85Nm.

Bevorzugt ist die Achse der Rotorwelle unterhalb einer Befestigungsebene und eine Achse der Tretwelle oberhalb der Befestigungsebene angeordnet, wobei die Befestigungsebene aus einer Achse eines ersten Befestigungsmittels und einer Achse eines zweiten Befestigungsmittels, insbesondere eines ausschließlich zweiten Befestigungsmittels, aufgespannt ist. Mit unterhalb und oberhalb ist eine räumliche Anordnung gemeint. Die Anordnung ist aus einer Richtung gesehen, die parallel zur Achse der Tretwelle ist.

Die Erfindung betrifft ferner ein Fahrrad insbesondere ein Elektrofahrrad, eBike, Pedelec oder S-Pedelec, welches eine Antriebseinheit gemäß einer der vorherigen Ausführungen umfasst.

Die Erfindung betrifft ferner ein Verfahren zur Montage einer Antriebseinheit, insbesondere einer Antriebseinheit gemäß einer der vorherigen Ausführungen, umfassend die folgenden Schritte:
- Bereitstellen einer ersten Gehäusehälfte einer Antriebseinheit, wobei ein Stator eines Motors in der ersten Gehäusehälfte befestigt ist,
- Einsetzen einer Rotorwellenanordnung umfassend einen Rotor und eine Rotorwelle des Motors, und zumindest eine weitere Gehäusekomponente
- Einsetzen einer zumindest ersten Platine
- Einsetzen eines Getriebes
- Aufsetzen einer zweiten Gehäusehälfte, dadurch gekennzeichnet, dass, eine Tretwellenbaugruppe vor der Rotorwellenanordnung eingesetzt wird oder die Tretwellenbaugruppe vor der zumindest ersten Platine eingesetzt wird.

Erfindungsgemäß ist die Montage einer Antriebseinheit von zuvor montierten Baugruppen besonders effizient und kann mit dem vorgeschlagenen Verfahren zusätzlich optimiert werden. Die im Vorfeld montierten Baugruppen werden auf unterschiedlichen Montagelinien vorgefertigt und für das vorgeschlagene Verfahren bereitgestellt. So soll unter "Einsetzen" auch ein zuvor erfolgtes "Bereitstellen" verstanden werden, was zur besseren Übersicht aber nicht aufgeführt wurde. Das "Bereitstellen einer ersten Gehäusehälfte einer Antriebseinheit" ist der erste Schritt zur Durchführung des erfindungsgemäßen Verfahrens.

In einem weiteren Schritt wird die Rotorwellenanordnung eingesetzt, wobei insbesondere ein Wellenzapfen der Rotorwelle in eine Lageranordnung des Gehäuses gefügt wird und eine zumindest eine weitere Gehäusekomponente, welche eine Ausrichtung der Rotorwelle vollzieht, gefügt.

In einem weiteren Schritt wird die zumindest erste Platine eingesetzt. Das Einsetzen der zumindest einen ersten Platine umfasst ein Zentrieren und befestigen der zumindest einen ersten Platine. Ein Befestigen kann beispielsweise durch Schrauben, Umschmelzen von der zumindest einen ersten Platine durchdringende Kunststoff-Pins erfolgen oder durch eine Schneid-Klemmverbindung, welche die Platine befestigt.

In einem weiteren Schritt wird das Getriebe eingesetzt. Das Einsetzen des Getriebes umfasst insbesondere ein Ausrichten einer auf der Rotorwelle angeordneten Verzahnung mit einer ersten Getriebestufe des Getriebes.

In einem weiteren Schritt wird die zweite Gehäusehälfte aufgesetzt. Das Aufsetzen kann ein Aufbringen von Dicht- oder Klebemasse und ein Befestigen der Gehäusehälften umfassen.

Erfindungsgemäß kann die Tretwellenbaugruppe vor der Rotorwellenanordnung oder vor der zumindest ersten Platine eingesetzt werden. Besonders vorteilhaft ist, dass die Montage der Antriebseinheit hierdurch flexibler gestaltet werden kann. In einer Ausführungsform kann, in teil- oder vollautomatisierten Montageabläufen. bei einem Stillstand einer Fügeanlage, ein Montageprozess vorgezogen oder nachgelagert werden, was zu einer erhöhten Verfügbarkeit und schnelleren Montage führt.

Anhand der Figuren soll die Erfindung näher erläutert werden. Dabei zeigen:
- Figur 1:: Schematische Ansicht der erfindungsgemäßen Antriebseinheit mit allen Baugruppen
- Figur 2:: Schematische Innenansicht einer ersten Ausführungsform der Antriebseinheit in einer ersten Ausbaustufe
- Figur 3:: Schematische Innenansicht einer ersten Ausführungsform der Antriebseinheit in einer zweiten Ausbaustufe
- Figur 4:: Schematische Außenansicht einer ersten Ausführungsform der Antriebseinheit in einer dritten Ausbaustufe
- Figur 5:: Schematische Außenansicht einer ersten Gehäusehälfte einer ersten Ausführungsform der Antriebseinheit in einer dritten Ausbaustufe
- Figur 6:: Schematische Innenansicht einer zweiten Ausführungsform der Antriebseinheit in einer ersten Ausbaustufe
- Figur 7:: Schematische Innenansicht einer dritten Ausführungsform der Antriebseinheit in einer ersten Ausbaustufe
- Figur 8:: Schematische Außenansicht einer dritten Ausführungsform der Antriebseinheit in einer zweiten Ausbaustufe
- Figur 9:: eine schematische Ansicht eines Fahrrads mit einer erfindungsgemäßen Antriebseinheit,
- Figur 10:: Schematische Darstellung des erfindungsgemäßen Verfahrens.

### Ausführungsformen der Erfindung

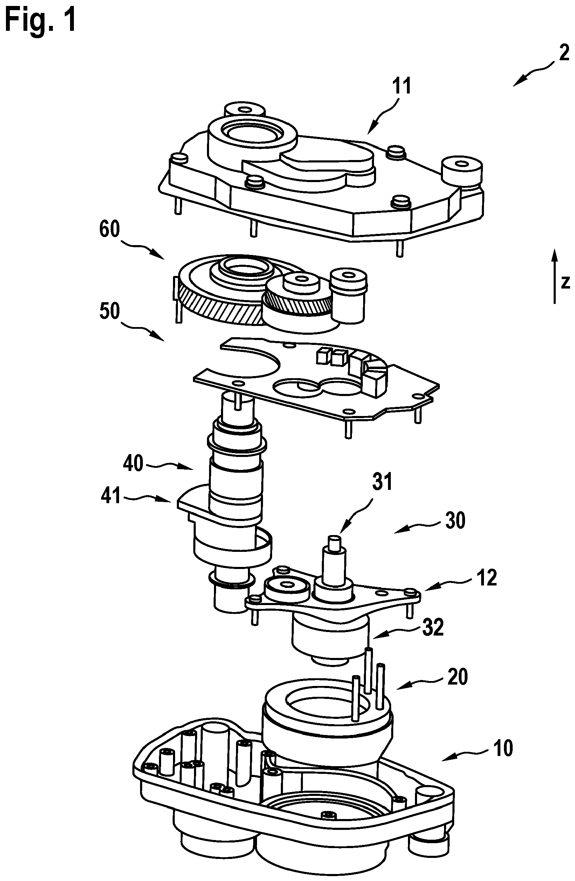

Figur 1 zeigt eine erfindungsgemäße Antriebseinheit 2 in einer Explosionsdarstellung.

Das Gehäuse umfasst zumindest eine erste Gehäusehälfte 10 und eine weitere Gehäusehälfte 11. Die erste Gehäusehälfte 10 kann dabei eine Halbschale oder ein Boden sein. Die erste Gehäusehälfte 10 und die zumindest eine weitere Gehäusehälfte 11 weisen Durchbrüche auf, die von im Innern der Antriebseinheit 2 angeordneten Bauteile teilweise oder vollständig durchdrungen werden können. Beispielsweise zeigt Figur 1, wie ein Teil der Tretwellenbaugruppe 40 die Gehäusehälften 10, 11 vollständig durchdringt. Die zumindest eine weitere Gehäusehälfte 11 ist eine Halbschale, beziehungsweise ein Deckel. Die erste Gehäusehälfte 10 und die zumindest eine weitere Gehäusehälfte 11 sind lösbar verbunden und aneinander abgestützt. Die erste Gehäusehälfte 10 und die zumindest eine weitere Gehäusehälfte 11 sind verschraubt.

Figur 1 zeigt weiter einen Stator 20 eines Motors, der in der ersten Gehäusehälfte 10 befestigt wird. Der Stator 20 des Motors ist ein Teil eines elektrischen Antriebs der Antriebseinheit und ist derart lösbar oder unlösbar in der ersten Gehäusehälfte 10 befestigt, dass er in Bezug zu der ersten Gehäusehälfte 10 keine Bewegung ausführen kann. In dieser Ausführungsform ist der Stator 20 in die zumindest erste Gehäusehälfte 10 eingepresst (aufgrund der Explosionszeichnung nicht dargestellt).

Die Tretwellenbaugruppe 40 umfasst eine Schnittstelle für Kurbeln 119 des Fahrzeugs 100 und ist dazu eingerichtet eine Trittkraft des Fahrers des Fahrzeugs 100 aufzunehmen. Ferner zeigt Figur 1 eine Messvorrichtung 41 der Tretwellenbaugruppe 40, welche zur Bestimmung eines an einer Tretwelle 103 anliegenden Fahrerdrehmoments eingerichtet ist.

Die zumindest eine erste Platine 50, umfasst Elektronikbaugruppen zur Steuerung und/oder Regelung der Antriebseinheit 2. Dabei soll die zumindest eine Platine 50 als eine Hauptplatine, oder zentrale Platine verstanden werden, welche die elementare Elektronikbaugruppen oder Bausteine zur Steuerung und/oder Regelung der Antriebseinheit umfasst. In vorliegender Ausführungsform gemäß Figur 1 ist nur eine Hauptplatine 50 verbaut. Die zumindest eine erste Platine 50 ist durch einen Platinenherstellungsprozess gefertigt und strukturiert. Die zumindest eine erste Platine 50 kann zu einer Strukturierung der Antriebseinheit dienen. Mit der Strukturierung wird eine räumliche Struktur innerhalb der Antriebseinheit herbeigeführt. Ferner ist mit der Strukturierung eine funktionelle Struktur gemeint. Wie in Figur 1 zu erkennen ist, sind alle Getriebestufen des Getriebes 60 oberhalb (Richtung z) der zumindest einen ersten Platine angeordnet und erfordern damit kein Wechsel oder Sprünge der Kraftverläufe von einer Platinenvorderseite zu einer Platinenrückseite.

Die Rotorwellenanordnung 30 umfasst neben einer Rotorwelle 31 auch Elemente zur Lagerung der Rotorwelle 31, eine weitere Gehäusekomponente 12 und eine Rotorlagemagnetanordnung (nicht dargestellt). Der Rotor 32 des Motors, als ein weiterer Teil des elektrischen Antriebs, ist drehfest auf der Rotorwelle 31 angeordnet.

Das Getriebe 60, welches eingerichtet ist, ein vom Motor erzeugtes Drehmoment an die Tretwellenbaugruppe 40 zu übertragen ist ein Stirnradgetriebe. Das Getriebe kann ein-, zwei- oder dreistufig ausgeführt sein. Darüber hinaus ist in Figur 1 angedeutet, dass das Getriebe 60 eine Wanne aufweist, die dazu eingerichtet ist, das Getriebe 60 zumindest teilweise aufzunehmen. Die Wanne weist dabei Ausnehmungen auf. Die Wanne weist zusätzliche Taschen oder Reservoirs (nicht dargestellt) die als ein Träger für ein Getriebefett, beziehungsweise Schmierung des Getriebes, dienen.

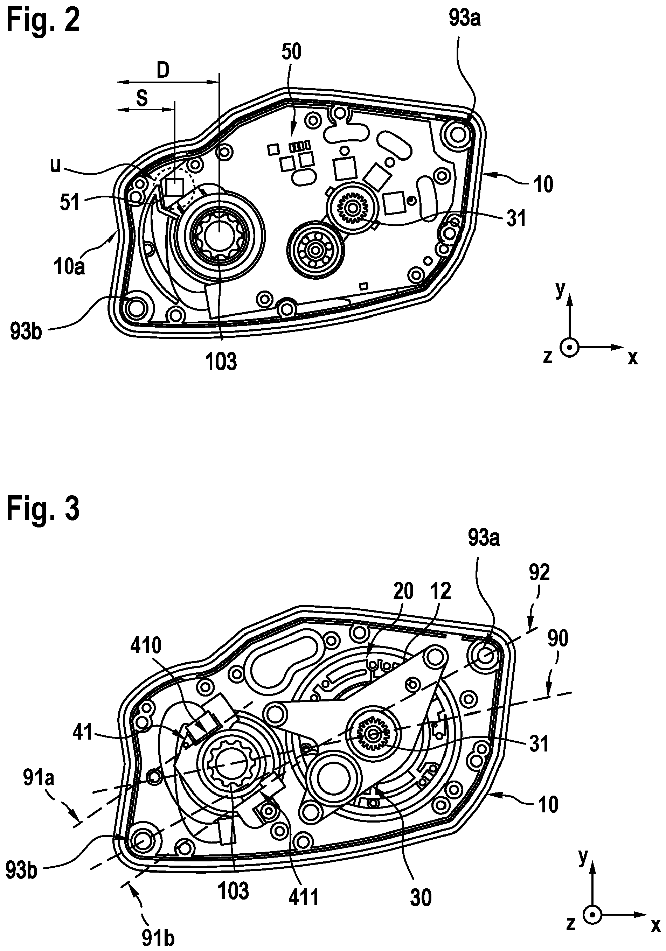

Die Figuren 2 bis 5 zeigen schematische Innen- und Außenansichten einer ersten Ausführungsform der Antriebseinheit in verschiedenen Ausbaustufen. Mit anderen Worten beziehen sich alle Ansichten auf die gleiche, erste Ausführungsform.

Insbesondere zeigt Figur 2 eine schematische Innenansicht einer ersten Ausführungsform der Antriebseinheit in einer ersten Ausbaustufe. Dabei ist eine erste Gehäusehälfte 10 mit einer bereits eingesetzten Platine 50 und einer Tretwellenbaugruppe 40 gezeigt. Weiterhin ist auf der Platine 50 ein angeordneter Geschwindigkeitssensor 51 dargestellt, der mit einem ersten Abstand S, relativ zu einer hinteren Gehäusefläche 10a, positioniert ist. In der gezeigten ersten Ausführungsform liegt der Abstand S in einem Bereich von 26-29 mm. Ferner ist ein weiterer Abstand u von dem Geschwindigkeitssensor 51 zu einem ferromagnetischen Teil von 8mm nicht unterschritten (nicht dargestellt). Figur 2 zeigt weiter einen Abstand D von einer Achse der Tretwelle 103 zu der hinteren Gehäusefläche 10a. In der gezeigten ersten Ausführungsform liegt der Abstand D in einem Bereich von 35mm bis 45mm.

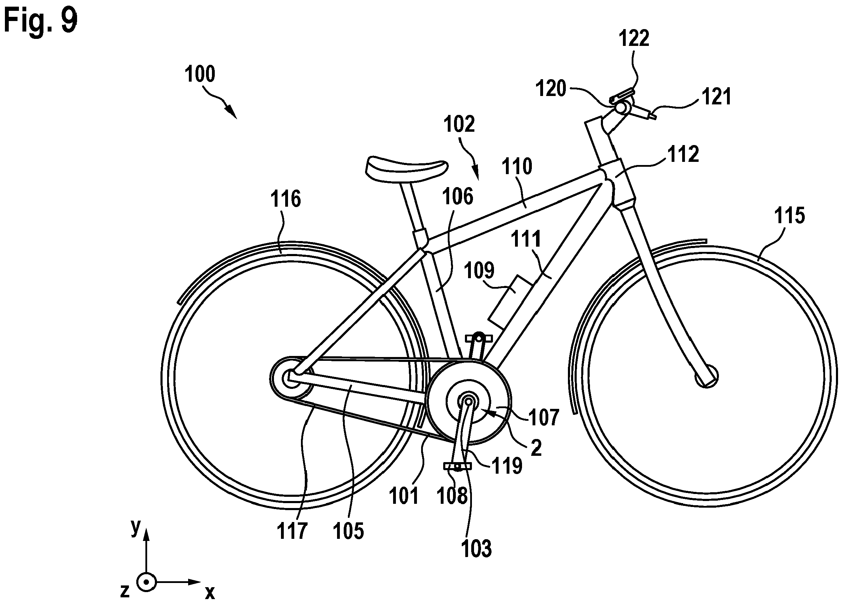

Figur 3 zeigt eine schematische Innenansicht einer ersten Ausführungsform der Antriebseinheit 2 in einer zweiten Ausbaustufe. Gezeigt sind die Tretwellenbaugruppe 40 mit einer Messvorrichtung 41, wobei die Messvorrichtung 41 eine erste Messplatine 410 und eine zweite Messplatine 411 umfasst. Die erste Messplatine 410 und die zweite Messplatine sind im Wesentlichen parallel angeordnet. Die erste Messplatine 410 umfasst eine mit einer Oberfläche der ersten Messplatine 410 identische Messplatinenebene 91a. Die zweite Messplatine 411 umfasst eine mit einer Oberfläche der zweiten Messplatine 411 identische Messplatinenebene 91b. Figur 3 zeigt außerdem eine erste Ebene 90, welche aus einer ersten Achse, welche koaxial zu der Tretwelle 103 angeordnet ist und einer weiteren Achse, die koaxial zu der Rotorwelle 31 angeordnet ist, aufgespannt ist. Die Messplatinenenebenen 91a, 91b sind in dieser konkreten Ausführungsform in einem Winkel von kleiner 45° zu der ersten Ebene 90 angeordnet. Gezeigt ist außerdem eine Befestigungsebene 92, die sich aus einer Achse eines ersten Befestigungsmittels 93a und einer Achse eines zweiten Befestigungsmittels 93b, aufspannt. Ein Befestigungsmittel 93a, b ist ein Mittel mit der die Antriebseinheit 2 an einem Rahmenbauteil 102 (gezeigt in Fig. 9) des Fahrzeugs 100 befestigt ist.

Darüber hinaus ist in der in Figur 3 gezeigten zweiten Ausbaustufe noch keine erste Platine 50 verbaut, wodurch die Rotorwellenanordnung 30 mit einer weiteren Gehäusekomponente 12, insbesondere einem Lagerschild 12, einer Rotorwelle 31 dem Stator 20 zu erkennen sind.

Ferner ist Figur 3 zu entnehmen, dass sich die Achse der Rotorwelle 31 in einer negativen Richtung y unterhalb der Befestigungsebene 92 befindet und sich die Achse der Tretwelle in einer positiven Richtung y, oberhalb der Befestigungsebene 92 befindet.

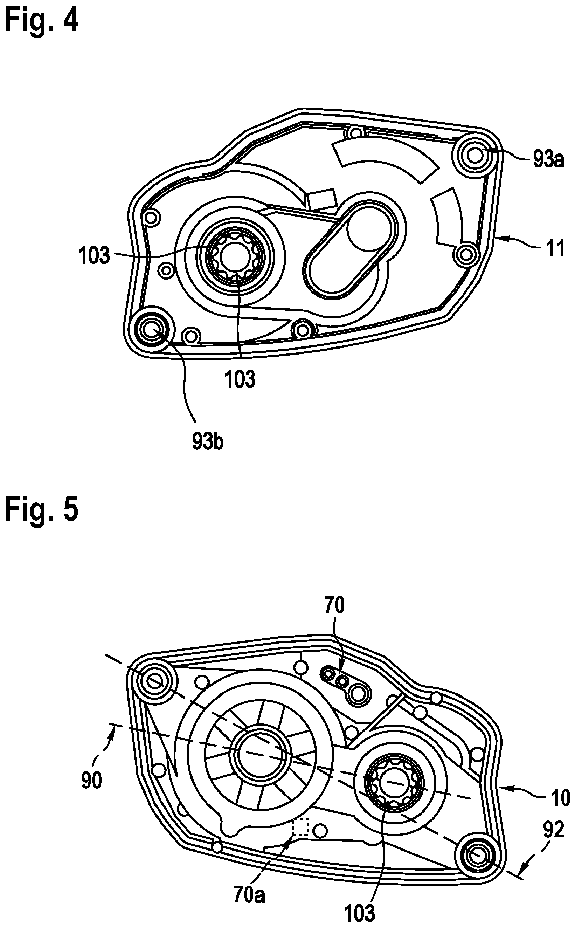

Figur 4 zeigt eine schematische Außenansicht einer ersten Ausführungsform der Antriebseinheit 2 in einer dritten Ausbaustufe. Dabei ist ein Deckel 11 und die Tretwelle 103 gezeigt, welche durch eine Ausnehmung im Deckel 11, diesen vollständig durchdringt.

Figur 5 zeigt eine schematische Außenansicht einer ersten Gehäusehälfte 10 einer ersten Ausführungsform der Antriebseinheit 2 in einer dritten Ausbaustufe. Figur 4 und Figur 5 zeigen damit die gleiche Ausbaustufe mit einer um 180° gedrehten Antriebseinheit 2. Eine Steckervorrichtung 70 ist in einer Richtung y oberhalb der ersten Ebene angeordnet. Die Steckervorrichtung 70 kann mehrere Steckplätze oder nur einen Stecker umfassen. Die Steckvorrichtung 70 ist eine Schnittstelle der Antriebseinheit 2 zu weiteren Komponenten des Fahrzeugs 100, wie zum Beispiel einer Anzeige- und/oder Bedieneinheit 122 (siehe auch Fig. 9). Besonders vorteilhaft ist, dass die Steckervorrichtung 70 in einem geschützten Bereich des Rahmenbauteils 102 angeordnet ist, sodass Einflüsse wie Feuchtigkeit oder Staub besser zurückgehalten werden können. Figur 5 zeigt weiter, dass die Steckervorrichtung 70 oberhalb der Befestigungsebene 92 angeordnet ist. In einer alternativen Ausgestaltung kann die Steckervorrichtung 70a (schematisch mit Strichlinien angedeutet) auch unterhalb der Befestigungsebene 92 oder der ersten Ebene 90 angeordnet sein.

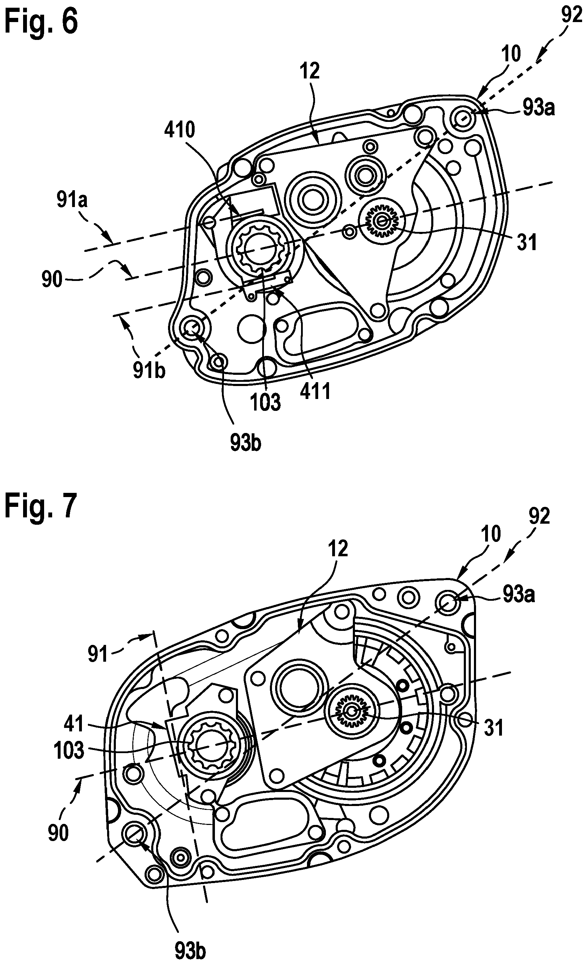

Figur 6 zeigt eine schematische Innenansicht einer zweiten Ausführungsform der Antriebseinheit 2 in einer ersten Ausbaustufe. Figur 7 zeigt eine schematische Innenansicht einer dritten Ausführungsform der Antriebseinheit in einer ersten Ausbaustufe. Die Figuren 6 und 7 befinden sich somit auf einer gleichen Ausbaustufe und zeigen insbesondere die Unterschiede in den Ausführungsformen. Ein Hauptaugenmerk liegt dabei auf der Tretwellenanordnung 40 mit der jeweils vorhanden Messvorrichtung 41. Bereits in den Figuren 1 bis 5 gezeigte Elemente der Antriebseinheit 2 werden nur noch aufgeführt, wenn sie für die Erläuterung der Ausführungsform dienlich sind.

Figur 6 zeigt eine Messvorrichtung 41 mit zwei Messplatinen 410, 411 mit der jeweiligen Messplatinenebene 91a und der Messplatinenebene 91b. Die erste Ebene 90 ist im Wesentlichen parallel und zu der Messplatinenebene 91a und der Messplatinenebene 91b angeordnet.

Figur 7 zeigt hingegen eine Messvorrichtung 41 mit nur einer Messplatine 410 und der Messplatinenebene 91. Die erste Ebene 90 ist im Wesentlichen orthogonal und zu der Messplatinenebene 91.

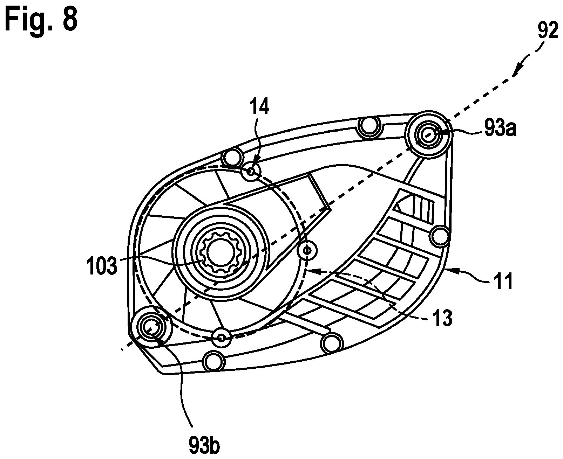

Figur 7 und Figur 8 zeigen eine dritten Ausführungsform der Antriebseinheit 2. Figur 7 zeigt eine Innenansicht einer ersten Ausbaustufe, während Figur 8 eine Außenansicht einer zweiten Ausbaustufe zeigt.

In Figur 8 ist dabei ist ein Deckel 11 und die Tretwelle 103 gezeigt. Die Tretwelle 103 durchdringt den Deckel 11, durch eine Ausnehmung, vollständig. Gezeigt sind unter anderem drei Befestigungsmittel 14 für einen Kettenkasten (nicht dargestellt), wobei alle drei Befestigungsmittel 14 für den Kettenkasten auf einem Radius 13 von 95mm angeordnet sind. Der Radius 13 ist konzentrisch um die Achse der Tretwelle 103 angeordnet. Die Befestigungsmittel 14 für den Kettenkasten sind in der gezeigten Ausführungsform Gewindebohrungen.

Allen gezeigten Ausführungsformen Figur 2 bis Figur 8 ist gemein, dass sich ein Winkel aus der Befestigungsebene 92 und der ersten Ebene 90 von kleiner gleich 45° einstellt.

Figur 9 zeigt eine vereinfachte schematische Ansicht eines Fahrrads 100, insbesondere ein Pedelec oder S-Pedelec, mit der Antriebseinheit 2. Das Fahrrad 100 weist ein Vorderrad 115 und ein Hinterrad 116 auf, wobei das Hinterrad 116 an der Hinterradnabe 118 mittels eines Verbindungselements 101, insbesondere eines Zahnriemens oder einer Kette, und mittels der Antriebseinheit 2 durch die Trittkraft des Radfahrers auf die Pedale 108 angetrieben wird. Die Pedale 108 sind dazu mit Kurbeln 119 verbunden, welche wiederum mit jeweils unterschiedlichen Enden der Tretwelle 103 verbunden sind. Die Antriebseinheit 2, ist dazu eingerichtet, ein an der Tretwelle 103 wirkendes Fahrerdrehmoment zu unterstützen und an ein Abtriebsritzel 107 zu übertragen, welches in unmittelbarem Eingriff mit dem Verbindungselement 101 zum Antrieb des Fahrrads 100 steht. Das Rahmenbauteil 102 des Fahrzeugs 100 umfasst insbesondere ein Sitzrohr 106, ein Unterrohr 111 mit einer Achse des Unterrohrs 211, ein Oberrohr 110, ein Steuerrohr 112, eine Kettenstrebe 105, welche unlöslich miteinander verbunden, beispielsweise miteinander verschweißt sind. Weiterhin weist das Fahrrad 100 einen Lenker 120 auf. Die im Antriebseinheit 2 ist über ein Kabel (angedeutet) mit einem Batteriemodul 109 verbunden und wird durch dieses gespeist.

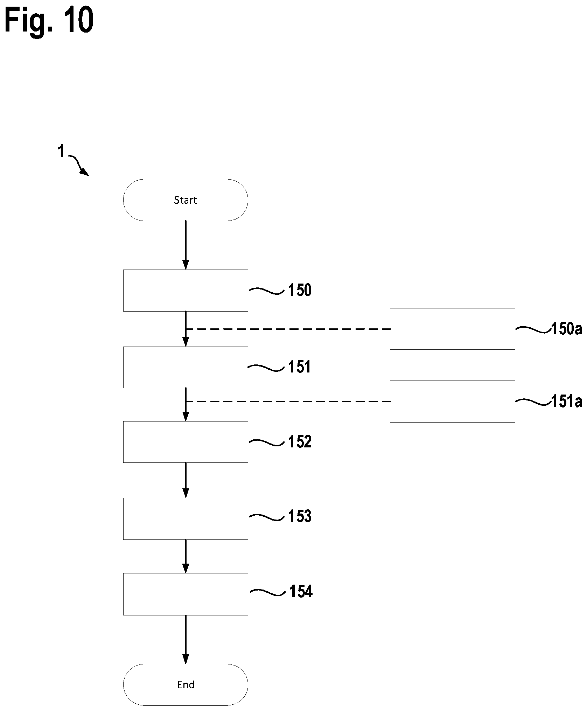

Figur 10 zeigt eine schematische Darstellung des erfindungsgemäßen Verfahrens 1 zur Montage einer Antriebseinheit 2.

Erfindungsgemäß ist die Montage einer Antriebseinheit 2 von zuvor montierten Baugruppen besonders effizient und kann mit dem vorgeschlagenen Verfahren 1zusätzlich optimiert werden. Die im Vorfeld montierten Baugruppen werden auf unterschiedlichen Montagelinien vorgefertigt und für das vorgeschlagene Verfahren 1 bereitgestellt. So soll unter "Einsetzen" auch ein zuvor erfolgtes "Bereitstellen" verstanden werden, was zur besseren Übersicht aber nicht dargestellt wird.

Das "Bereitstellen einer ersten Gehäusehälfte einer Antriebseinheit" 150 ist der erste Schritt zur Durchführung des erfindungsgemäßen Verfahrens.

In einem weiteren Schritt 151 wird die Rotorwellenanordnung 30 eingesetzt, wobei ein Wellenzapfen der Rotorwelle 32 in eine Lageranordnung des Gehäuses 10 gefügt wird und eine zumindest eine weitere Gehäusekomponente 12, welche eine Ausrichtung der Rotorwelle 32 vollzieht, eingesetzt wird.

In einem weiteren Schritt 152 wird eine zumindest erste Platine 50 eingesetzt. Das Einsetzen der zumindest einen ersten Platine 50 umfasst ein Zentrieren und Befestigen der zumindest einen ersten Platine 50 (nicht dargestellt). Ein Befestigen kann beispielsweise durch ein Umschmelzen von der zumindest einen ersten Platine durchdringende Kunststoff-Pins erfolgen. Alternativ kann eine Schneid-Klemmverbindung, welche die Platine 50 befestigt, verwendet werden.

In einem weiteren Schritt 153 wird das Getriebe 60 eingesetzt. Das Einsetzen des Getriebes 60 umfasst ein Ausrichten einer Verzahnung auf der Rotorwelle 32 angeordneten Verzahnung mit einer ersten Getriebestufe des Getriebes 60.

In einem weiteren Schritt 154 wird die zweite Gehäusehälfte aufgesetzt. Das Aufsetzen kann ein Aufbringen von Dicht- oder Klebemasse und ein Befestigen der Gehäusehälften umfassen.

Erfindungsgemäß kann die Tretwellenbaugruppe in einem Schritt 150a vor der Rotorwellenanordnung oder in einem alternativen Schritt 151a vor der zumindest ersten Platine 50 eingesetzt werden. Besonders vorteilhaft ist, dass die Montage der Antriebseinheit hierdurch flexibler gestaltet werden kann. In teil- oder vollautomatisierten Montageabläufen kann beispielsweise bei einem Stillstand einer Fügeanlage, ein Montageprozess vorgezogen oder nachgelagert werden, was zu einer erhöhten Verfügbarkeit und schnelleren Montage führt.

## Patentansprüche

1. Antriebseinheit für ein mit Muskel und/ oder Motor betriebenes Fahrzeug, insbesondere eBike, Pedelec oder S-Pedelec, umfassend
1. Ein Gehäuse der Antriebseinheit, wobei das Gehäuse eine erste Gehäusehälfte (10) und eine weitere Gehäusehälfte (11) umfasst und wobei
2. ein Stator (20) eines Motors in der ersten Gehäusehälfte (10) befestigt ist,
3. eine Tretwellenbaugruppe (41),
4. zumindest eine erste Platine (50),
5. eine Rotorwellenanordnung (30) umfassend einen Rotor (32), eine Rotorwelle (31) des Motors, und zumindest eine weitere Gehäusekomponente (12),
6. Zumindest ein Getriebe (60), welches eingerichtet ist, ein vom Motor erzeugtes Drehmoment an die Tretwellenbaugruppe (41) zu übertragen,
**dadurch gekennzeichnet, dass**
alle Baugruppen derart angeordnet sind, dass sie aus einer Hauptmontagerichtung (z) eingesetzt werden können.

2. Antriebseinheit nach Anspruch 1, **dadurch gekennzeichnet, dass** die Baugruppen derart angeordnet sind, dass für das Einsetzen der Baugruppen eine weitere translatorische (x, y) Montagerichtung und/oder rotatorische Montagerichtung vorgesehen ist.

3. Antriebseinheit nach Anspruch 1 oder 2, **dadurch gekennzeichnet, dass** die Tretwellenbaugruppe (41) keine Interferenzen mit der Rotorwellenanordnung (30) und dem Stator (20) des Motors aufweist.

4. Antriebseinheit nach einem der vorherigen Ansprüche, **dadurch gekennzeichnet, dass** eine Steckervorrichtung (70) in einer Richtung (y) oberhalb einer ersten Ebene (90) angeordnet ist,
wobei die erste Ebene (90) aus einer Achse, welche koaxial zu der Tretwelle (103) angeordnet ist und einer weiteren Achse, die koaxial zu der Rotorwelle (31) angeordnet ist, aufgespannt ist.

5. Antriebseinheit nach der vorherigen Ansprüche, **dadurch gekennzeichnet, dass** die Steckervorrichtung (70) in einer Richtung (y) unterhalb der ersten Ebene (90) angeordnet ist,
wobei die erste Ebene (90) aus einer Achse, welche koaxial zu der Tretwelle angeordnet ist und einer weiteren Achse, die koaxial zu der Rotorwelle (31) angeordnet ist, aufgespannt ist.

6. Antriebseinheit nach einem der vorherigen Ansprüche, ferner umfassend zumindest einen Geschwindigkeitssensor (51),
wobei der zumindest eine Geschwindigkeitssensor (51) auf der zumindest ersten Platine (50) angeordnet ist und einen ersten Abstand (S) zu einer hinteren Gehäusefläche (10a) aufweist, wobei der erste Abstand (S) in einem Bereich von 5mm- 50mm, bevorzugt 5mm -45mm, besonders bevorzugt 5mm -35mm liegt.

7. Antriebseinheit nach einem der vorherigen Ansprüche, ferner umfassend zumindest einen Geschwindigkeitssensor (51),
wobei der zumindest eine Geschwindigkeitssensor (51) auf der zumindest ersten Platine (50) angeordnet ist und einen weiteren Abstand (u) zu einem ferromagnetischen Teil nicht unterschreitet, **dadurch gekennzeichnet, dass** der weitere Abstand 1mm - 10mm, bevorzugt 1 mm- 8 mm, besonders bevorzugt 3 - 7mm nicht unterschreitet.

8. Antriebseinheit nach einem der vorherigen Ansprüche, wobei die Tretwellenbaugruppe (40) ferner eine Messvorrichtung (41) aufweist, die dazu geeignet ist, ein an der Tretwelle (103) anliegendes Drehmoment zu erfassen, und dabei zumindest eine Messplatine (410) umfasst, **dadurch gekennzeichnet, dass**
die zumindest eine Messplatine (410) parallel oder orthogonal zu der ersten Ebene (90), angeordnet ist.

9. Antriebseinheit nach einem der vorherigen Ansprüche, ferner umfassend Befestigungsmittel (14) für einen Kettenkasten, **dadurch gekennzeichnet, dass** zumindest zwei Befestigungsmittel (14) des Kettenkastens auf einem Radius (13) angeordnet sind,
wobei der Radius (13) konzentrisch um die Achse der Tretwelle (103) angeordnet ist und insbesondere in einem Bereich von 80mm - 110mm liegt, bevorzugt 90mm -100mm, liegt.

10. Antriebseinheit nach einem der vorherigen Ansprüche, **dadurch gekennzeichnet, dass** eine erste Gehäuselänge (D) weniger als 45mm beträgt, bei einem Abtriebsmoment der Antriebseinheit (2) von größer oder gleich 85Nm.

11. Antriebseinheit nach einem der vorherigen Ansprüche, **dadurch gekennzeichnet, dass** die erste Gehäuselänge weniger als 42mm, bevorzugt kleiner oder gleich 40mm, besonders bevorzugt kleiner oder gleich 39mm beträgt, bei einem Abtriebsmoment der Antriebseinheit (2) von größer oder gleich 85Nm.

12. Antriebseinheit nach einem der vorherigen Ansprüche, **dadurch gekennzeichnet, dass** eine Achse der Rotorwelle (31) unterhalb einer Befestigungsebene (92) und die Achse der Tretwelle (103) oberhalb der Befestigungsebene (92) angeordnet sind, wobei die Befestigungsebene (92) aus einer Achse eines ersten Befestigungsmittels (93a) und einer Achse eines zweiten Befestigungsmittels (93b), insbesondere eines ausschließlich zweiten Befestigungsmittels (93b), aufgespannt ist.

13. Fahrrad (100) mit einer Antriebseinheit (2) gemäß einem der vorherigen Ansprüche.

14. Verfahren (1) zur Montage einer Antriebseinheit (2), insbesondere einer Antriebseinheit (2) nach einem der Ansprüche 1 bis 10, umfassend die folgenden Schritte:
• Bereitstellen (150) einer ersten Gehäusehälfte einer Antriebseinheit, wobei ein Stator eines Motors in der ersten Gehäusehälfte befestigt ist,
• Einsetzen (151) einer Rotorwellenanordnung umfassend einen Rotor, eine Rotorwelle des Motors, und zumindest eine weitere Gehäusekomponente
• Einsetzen (152) einer zumindest ersten Platine
• Einsetzen (153) eines Getriebes
• Aufsetzen (154) einer zweiten Gehäusehälfte, **dadurch gekennzeichnet, dass**,
eine Tretwellenbaugruppe vor der Rotorwellenanordnung eingesetzt (150a) wird oder die Tretwellenbaugruppe vor der zumindest ersten Platine eingesetzt (151a) wird.
